# EUROPEAN PATENT SPECIFICATION

(11) **EP 4 295 734 B1**
(45) Date of publication and mention of the grant of the patent: **04.03.2026**
(21) Application number: 22180047.7
(22) Date of filing: 21.06.2022
(51) Int. Cl.: A47J 43/07, A47J 43/10

(54) **WHISK AND KITCHEN APPLIANCE**
SCHNEEBESEN UND KÜCHENGERÄT
FOUET ET APPAREIL DE CUISINE

(43) Date of publication of application: 27.12.2023
(73) Proprietor: BSH Hausgeräte GmbH, 81739 München (DE)
(72) Inventor: Mejac, Matej, 1431 Dol pri Hrastniku (SI); Brecko, Ales, 3000 Celje (SI); Zlaus, Uros, 3201 Smartno v Rozni dolini (SI); Pajk, Luka, 3000 Celje (SI)

(56) References cited:
- CN-A- 114 568 979
- DE-C- 503 066
- DE-U- 1 863 729
- GB-A- 475 190
- US-B1- 6 394 640

## Description

The present invention concerns a whisk for or of a kitchen appliance, and a kitchen appliance comprising a base including a drive and a whisk.

Preparation of food often comprises blending or whipping ingredients which typically is done using a whisk. Such whisk may be rotated manually or electrically. In particular, electric kitchen appliances such as a hand mixer or a stand mixer or a more complex kitchen machine combining the functions of a stand mixer and of further devices (thereby providing, for instance, a chopping and/or a weighing function) each include an electric motor adapted to simplify food preparation in particular by driving a whisk.

Conventionally, a whisk comprises two or more individual wire loops whose ends are fixed to a rod of the whisk and which interlace at their respective middle section. Whisks for kitchen appliances are for example known from DE 503 066 C, GB 475 190 A, US 6 394 640 B1 and DE 18 63 729 U.

It is an object of the present invention to provide an improved whisk and a kitchen appliance comprising such whisk.

The object is achieved by a whisk according to claim 1 and by a kitchen appliance according to claim 8. Advantageous embodiments are disclosed in the dependent claims, the description and the figures.

A whisk according to the present invention is an accessory of a kitchen appliance, in particular of an electric kitchen appliance. The whisk comprises a rod configured to be connected to a drive of the kitchen appliance; accordingly, the rod is rotatable by the drive, (at least) about the longitudinal centre axis of the rod, which thus is a designated axis of rotation of the whisk.

Moreover, the whisk comprises a plurality of bows each having a first end and a second end.

A connector portion of the whisk connects the respective first ends of the bows with the rod. For instance, the connector portion may be fastened to the rod, or it may be integrally formed with the rod. Advantageously, it may comprise a (e.g., flat or domed) plate, in particular a disc, extending radially from the rod; as is to be noted, in this document, the terms "radial" and "axial" and their derivatives always relate to the (abstract) longitudinal centre axis of the rod (being at least one designated axis of rotation of the whisk).

The whisk further comprises a joining element which is spaced apart from the rod and which is fixed to the respective second ends of the rods; accordingly, the bows are joined together at their second ends by means of the joining element.

Due to the junction provided by the joining element, a stiffness of the whisk is increased. Thereby, deformation of the whisk basket (formed by the bows, the connector portion and the joining element), in particular individual movements of the respective bows during operation are prevented or at least reduced, which improves the food processing. Moreover, the junction element facilitates a reliably well cleaning of the whisk.

The bows may be at least partially made of metal and/or at least partially made of plastics. At least some of the bows may comprise at least a portion made of a flexible wire. According to preferred embodiments, at least some of the bows are stable components.

Advantageously, the bows are uniformly distributed about the longitudinal axis of the rod.

Additionally or alternatively, two or more, in particular all bows of the plurality may preferably be congruent to each other, i.e., shaped equally. Thereby, the production of the whisk can be simplified and rationalised.

According to particular advantageous embodiments, with respect to the longitudinal axis of the rod, a whisk basket formed by the bows, the connector portion and the joining element is rotationally symmetric of an order given by the cardinal number of the plurality, i.e., by the number of bows included in the whisk.

The plurality of bows may have an odd or an even cardinal number. According to advantageous embodiments, the plurality comprises at least 12, at least 16 or at least 18 bows. In particular, the plurality of bows may comprise at least two bows which are fixed to the joining element diametrically opposite to each other with respect to the longitudinal axis of the rod and/or the joining element.

According to advantageous embodiments, at their respective second ends, the bows are fixed to the joining element so as to extend therefrom in radial direction.

Additionally or alternatively, following a direction from their respective second end towards their respective first end, two or more of the bows may preferably comprise a section in which the respective bow is bent further away from the rod. As a consequence, in a radial circumference of the joining element, the bows may each comprise a portion compared to which the joining element is positioned axially offset towards the rod. In utilisation, such embodiments facilitate an advantageous contact of the bows to an inner surface of a bowl, which allows for an improved processing, in particular an enhanced whipping of food within the bowl.

According to the invention, at least one of the bows has an inflection point; accordingly the respective bow/s has/have both a convex and a concave portion. Furthermore, the inflection point/s is/are positioned in a radial circumference of the joining element. Such embodiments facilitate a particularly advantageous fixation of the bow/s to the joining element while allowing an advantageous position minimising a space formed, in utilisation, between the whisk and a surface of a bowl.

The joining element may be shaped as a flat or curved plate or as a ring respectively having a centre axis coinciding with the longitudinal centre axis of the rod. According to particular examples, the joining element hast a lens shape or a (e.g., cylindrical) button shape.

Holes may be formed in the joining element, wherein the second ends of the bows may be respectively arranged each within an allocated (assigned) one of the holes. Thereby, the fixation of the second ends may be achieved (such as by form fit) or at least strengthened. In particular, such holes may extend in radial direction and/or may be formed in a circumferential surface of the joining element.

Additionally or alternatively, the second ends of the bows may be fixed to the joining element by gluing, welding or brazing.

Analogously, holes may (additionally or alternatively) be formed in the connection portion, wherein the first ends of the bows may respectively be arranged each within an allocated (assigned) one of the holes. In particular, such holes may extend in radial direction and/or may be formed in a circumferential surface of the joining element. The first ends may be fastened in the holes by form fit. Additionally or alternatively, the first ends of the bows may be fastened to the connector portion by gluing, welding or brazing.

A kitchen appliance according to the present invention comprises a base station including a drive, in particular an electric motor. The kitchen appliance further comprises a whisk according to an embodiment of the present invention. Therein, the rod of the whisk is adapted to be connected with the drive, which is configured to rotate the rod (and thereby, the whisk) about the longitudinal axis of rotation of the rod. The drive may be configured to (simultaneously or selectively) rotate the the rod (and therewith, the whisk) about a further axis.

The kitchen appliance may be configured as a kitchen machine combining the functions of a stand mixer and of at least one further device, such as a device providing a weighing function and/or a chopping function.

According to advantageous embodiments, the kitchen appliance further comprises a bowl for processing food therein. Preferably, the whisk and the bowl are adapted to each other in shape, such that during rotation of the whisk, a distance of each of the bows to an inner surface of the bowl is smaller than or equal to a distance of the whisk's joining element to the inner surface of the bowl. Accordingly, the joining element does not impede a close proximity of the bows to the inner surface of the bowl. Thereby, a particularly good processing of the respective food within the interior of the bowl can be realised. As is to be noted, a distance of two components is defined as the smallest straight distance of two points, a first one of which is positioned on the first component, the second one of which positioned on the second component, the comparison (minimum) being taken over all first points on the first component and all second points on the second component.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: a whisk according to the prior art;
- Fig. 2:: an exemplary embodiment of a whisk according to the present invention in perspective view;
- Fig. 3:: a detail view of the whisk of Figure 2 positioned on a bowl surface; and
- Fig. 4:: a kitchen appliance according to an exemplary embodiment of the present invention.

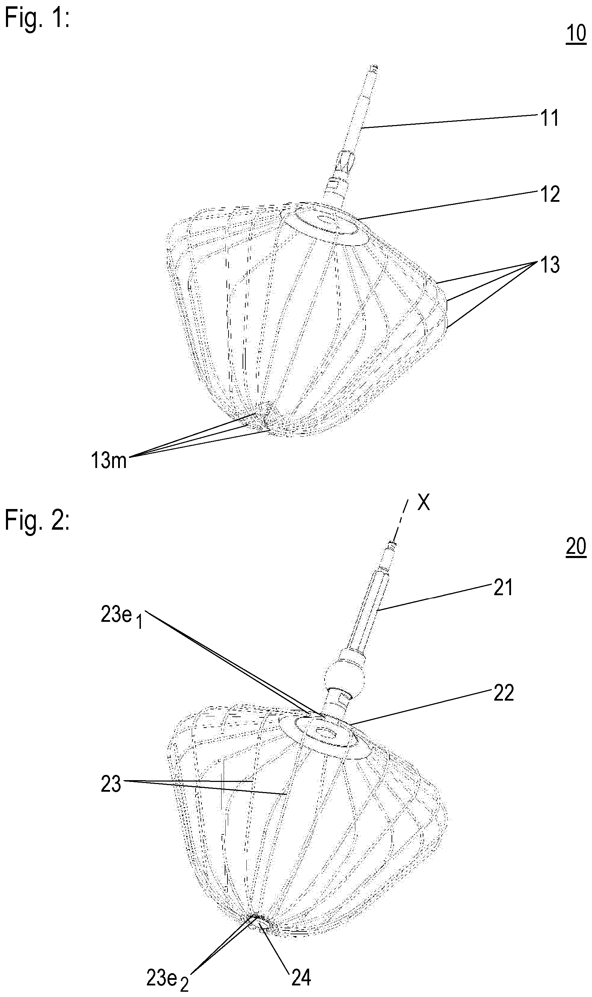

In Figure 1, a whisk 10 according to the prior art is shown in a perspective view. The whisk comprises a rod 11 for connection with a drive, and a plurality of loops 13 whose respective ends are fastened to a connector portion 12 of the whisk, the connector portion 12 connecting the loops 13 to the rod 11. In their respective middle section 13m, the loops 13 interlace with each other.

Figure 2 provides a perspective view of an inventive whisk 20 according to an exemplary embodiment. The whisk 20 comprises a rod 21 configured to be connected to a drive of a kitchen appliance, so as to be rotated, by means of the drive, about the longitudinal axis X of the rod 21 which thus is a designated axis of rotation of the whisk. The drive may be configured to (simultaneously or selectively) rotate the the rod (and therewith, the whisk) about a further axis.

The whisk 20 further comprises a plurality of bows 23 and a connector portion 22 which in the present case includes a plate, in particular a domed disc, extending radially (with respect to the longitudinal centre axis X) from the rod 21. The connector portion 22 connects the rod 21 with the respective first ends 23e₁ of each of the bows 23. Therein, at their respective first ends 23e₁, the bows are fastened to the connector portion 21 so as to extend therefrom in a direction comprising a radial component.

In the embodiment depicted, the fastening comprises the first ends 23e, being inserted in respective radial holes which are provided in a radially outer surface of the connector portion 21. Preferably, the bows are further fastened to the connector portion 21 by gluing, welding or brazing (not visible in the figures).

Moreover, the whisk 20 comprises a joining element 24 which is spaced apart from the rod 21 and from the connector portion 22, and to which the respective second ends 23e₂ of the bows 23 are fixed. Thereby, the joining element 24 joins the bows together. In the embodiment depicted, the joining element 24 is connected with the connector element exclusively be the bows.

The joining element 24 is shaped as a cylindrical button, and each of the bows 23 extends diametrically opposite (with respect to the designated axis X of rotation) to a further bow 23 from the joining element 24.

By the joining element 24, the interlacing of the bows 23 is avoided, due to which the whisk 20 is stiffer and has a plain and easily cleaned structure.

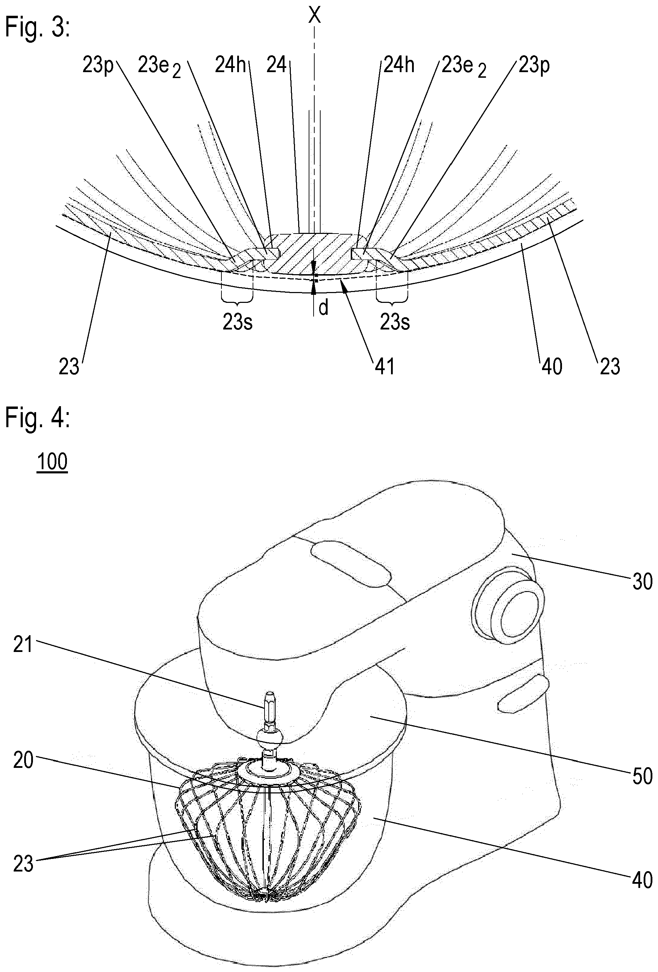

Figure 3 depicts a detail of the whisk 20 in cross section, wherein the whisk is positioned with its bows 23 contacting an inner surface 41 of a bowl 40. As can be seen in Figure 3, for fixation of the second ends 23e₂ of the bows 23 to the joining portion, said ends 23e₂ have been inserted each in a respective hole 24h extending in radial direction and being formed in a circumferential surface of the joining element 24. Preferably, the fixation of the second ends 23e₂ of the bows 23 to the joining element 24 further comprises a gluing, welding or brazing (not visible in the figures).

Following a direction from its respective second end 23e₂ towards its respective first end 23e₁, each bow 23 comprises a section 23s in which the bow 23 is bent further away from the rod (which is not depicted in Figure 3). In particular, each bow 23 has an inflection point 23p which in the present case is positioned in a radial circumference of the joining element 24. Due to the said shape of the bows, the joining element 24 is offset, compared to respective portions of the bows, towards the rod. As a consequence, the joining element 24 does not conflict with the bows 23 contacting the inner surface 41 of the bowl. Instead, in the embodiment shown, the distance d of the joining element 24 to said inner surface 41 is larger than the distance of the bows 23 to said inner surface 41 (which distance is almost zero). Thereby, a particularly good processing, in particular an enhanced whipping of food within the bowl is facilitated.

Figure 4 demonstrates a composition of a kitchen appliance 100 according to an exemplary embodiment of the present invention, the kitchen appliance 100 comprising a base station 30 including a drive (not visible), a bowl 40 with a lid 50, and a whisk 20 according to an embodiment of the present invention. For illustration purposes, the base station 30, the bowl 40 and the lid 50 (which covers the bowl 40 and which is penetrated by the rod 21 of the whisk 20) are shown as partially transparent, such that the whisk 20 is visible in its operation position, in which its rod 21 is connected to the drive of the base station 30 and in which its whisk head is arranged in an interior space of the bowl.

Disclosed are a whisk 20 for or of a kitchen appliance 100, and a kitchen appliance 100 comprising such whisk 20. The whisk comprises a rod 21 for connection to a drive, a plurality of bows 23 each having a first end 23e, and a second end 23e₂, the first end 23e, connected to the rod 21 by means of a connector portion 22. Moreover, the whisk comprises a joining element 24 which is spaced apart from the rod 21 and to which the second ends 23e₂ of the bows 23 are fixed.

### Reference signs

- 10: whisk according to prior art
- 11: rod
- 12: connector portion
- 13: loop
- 13m: middle region of a loop

- 20: whisk
- 21: rod
- 22: connector portion
- 23: bow
- 23e₁: first end of bow 23
- 23e₂: second end of bow 23
- 23p: inflection point of bow 23
- 23s: section of bow 23
- 24: joining element
- 24h: hole in joining element 24

- 30: base station
- 40: bowl
- 41: inner surface of bowl
- 50: lid of bowl

- d: distance of joining element to inner surface 41
- X: longitudinal axis of rod/ designated axis of rotation

## Claims

1. Whisk (20) for or of a kitchen appliance (100), the whisk comprising
- a rod (21) configured to be connected to a drive of the kitchen appliance,
- a plurality of bows (23) each having a first end (23e₁) and a second end (23e₂);
- a connector portion (22) connecting the rod (21) with the respective first end (23e₁) of each of the bows (23); and
- a joining element (24) spaced apart from the rod (21) and fixed to the respective second end (23e₂) of each of the bows (23), **characterized in that** one or more of the bows (23) has an inflection point (23p) positioned in a radial circumference of the joining element (24).

2. Whisk according to claim 1, wherein the connector portion (22) comprises a plate extending radially from the rod (21).

3. Whisk according to one of claims 1 or 2, wherein the respective first ends (23e₁) of the bows (23) are fixed in corresponding holes formed in the connector portion (22).

4. Whisk according to one of the preceding claims, wherein the respective second ends (23e₂) of the bows (23) are fixed in corresponding holes (24h) formed in the joining element (24).

5. Whisk according to one of the preceding claims, wherein following a direction from their respective second end (23e₂) towards their respective first end (23e₁), two or more of the bows comprise a section (23s) in which the respective bow (23) is bent further away from the rod (21).

6. Whisk according to one of the preceding claims, wherein the plurality comprises at least 12, at least 16 or at least 18 bows (23).

7. Whisk according to one of the preceding claims, wherein at least two or all of the bows (23) are shaped equally.

8. Kitchen appliance (100) comprising a base station (30) including a drive, and a whisk (20) according to one of the preceding claims, wherein the rod (21) of the whisk is adapted to be combined with the drive.

9. Kitchen appliance according to claim 8, further comprising a bowl (40), wherein during rotation of the whisk (20), a respective distance of each of the bows (23) to an inner surface of the bowl (40) is smaller than or equal to a distance of the joining element (24) to the inner surface of the bowl (40).

## Patentansprüche

1. Schneebesen (20) für ein oder von einem Küchengerät (100), der Folgendes umfasst:
- einen Stab (21), der so gestaltet ist, dass er sich mit einem Antrieb des Küchengeräts verbinden lässt,
- eine Vielzahl Bögen (23), die jeweils ein erstes Ende (23e₁) und ein zweites Ende (23e₂) aufweisen,
- einen Verbindungsteil (22), der den Stab (21) mit dem jeweiligen ersten Ende (23e₁) jedes der Bögen (23) verbindet, und
- ein Verbindungsstellenelement (24), das von dem Stab (21) beabstandet und an dem jeweiligen zweiten Ende (23e₂) jedes der Bögen (23) befestigt ist, **dadurch gekennzeichnet, dass** ein oder mehrere der Bögen (23) einen Wendepunkt (23p) aufweisen, der in einem radialen Umfang des Verbindungsstellenelements (24) angeordnet ist.

2. Schneebesen nach Anspruch 1, wobei der Verbindungsteil (22) eine Platte umfasst, die sich radial von dem Stab (21) aus erstreckt.

3. Schneebesen nach Anspruch 1 oder 2, wobei die jeweiligen ersten Enden (23e₁) der Bögen (23) in entsprechenden Löchern befestigt sind, die in dem Verbindungsteil (22) ausgebildet sind.

4. Schneebesen nach einem der vorhergehenden Ansprüche, wobei die jeweiligen zweiten Enden (23e₂) der Bögen (23) in entsprechenden Löchern (24h) befestigt sind, die in dem Verbindungsstellenelement (24) ausgebildet sind.

5. Schneebesen nach einem der vorhergehenden Ansprüche, wobei zwei oder mehr der Bögen in einer Richtung von ihrem jeweiligen zweiten Ende (23e₂) hin zu ihrem jeweiligen ersten Ende (23e₁) einen Abschnitt (23s) umfassen, in dem der jeweilige Bogen (23) weiter von dem Stab (21) weggebogen ist.

6. Schneebesen nach einem der vorhergehenden Ansprüche, wobei die Vielzahl mindestens 12, mindestens 16 oder mindestens 18 Bögen (23) umfasst.

7. Schneebesen nach einem der vorhergehenden Ansprüche, wobei mindestens zwei oder alle der Bögen (23) gleich geformt sind.

8. Küchengerät (100), das ein Grundgerät (30) mit einem Antrieb und einen Schneebesen (20) nach einem der vorhergehenden Ansprüche umfasst, wobei der Stab (21) des Schneebesens so ausgelegt ist, dass er sich mit dem Antrieb zusammenstecken lässt.

9. Küchengerät nach Anspruch 8, das ferner eine Schüssel (40) umfasst, wobei beim Drehen des Schneebesens (20) ein jeweiliger Abstand jedes der Bögen (23) zu einer Innenfläche der Schüssel (40) höchstens einem Abstand des Verbindungsstellenelements (24) zur Innenfläche der Schüssel (40) entspricht.

## Revendications

1. Fouet (20) pour un ou d'un appareil culinaire (100), le fouet comprenant :
- une tige (21) configurée pour être connectée à un entraînement de l'appareil culinaire,
- une pluralité de branches arquées (23) ayant chacune une première extrémité (23e₁) et une deuxième extrémité (23e₂),
- une partie de raccordement (22) reliant la tige (21) à la première extrémité respective (23e₁) de chacune des branches arquées (23), et
- un élément de liaison (24) espacé de la tige (21) et fixé à la deuxième extrémité respective (23e₂) de chacune des branches arquées (23),
**caractérisé en ce qu'**une ou plusieurs des branches arquées (23) présentent un point d'inflexion (23p) positionné dans une circonférence radiale de l'élément de liaison (24).

2. Fouet selon la revendication 1, dans lequel la partie de raccordement (22) comprend une plaque s'étendant radialement à partir de la tige (21).

3. Fouet selon l'une des revendications 1 ou 2, dans lequel les premières extrémités respectives (23e₁) des branches arquées (23) sont enracinées dans des trous correspondants formés dans la partie de raccordement (22).

4. Fouet selon l'une des revendications précédentes, dans lequel les deuxièmes extrémités respectives (23e₂) des branches arquées (23) sont enracinées dans des trous correspondants (24h) formés dans l'élément de liaison (24).

5. Fouet selon l'une des revendications précédentes, dans lequel, suivant une direction allant de leur deuxième extrémité respective (23e₂) vers leur première extrémité respective (23e₁), deux ou plusieurs des branches arquées comprennent une section (23s) dans laquelle la branche arquée respective (23) présente une courbure à une distance plus éloignée de la tige (21).

6. Fouet selon l'une des revendications précédentes, dans lequel la pluralité comprend au moins 12, au moins 16 ou au moins 18 branches arquées (23).

7. Fouet selon l'une des revendications précédentes, dans lequel au moins deux ou toutes les branches arquées (23) ont une forme identique.

8. Appareil culinaire (100) comprenant une station de base (30) incluant un entraînement, et un fouet (20) selon l'une des revendications précédentes, dans lequel la tige (21) du fouet est adaptée pour être combinée à l'entraînement.

9. Appareil culinaire selon la revendication 8, comprenant en outre un bol (40), dans lequel, durant une rotation du fouet (20), une distance respective de chacune des branches arquées (23) à une surface intérieure du bol (40) est inférieure ou égale à une distance de l'élément de liaison (24) à la surface intérieure du bol (40).
